# EUROPÄISCHE PATENTSCHRIFT

(11) **EP 3 323 770 B1**
(45) Veröffentlichungstag und Bekanntmachung des Hinweises auf die Patenterteilung: **27.10.2021**
(21) Anmeldenummer: 17202817.7
(22) Anmeldetag: 21.11.2017
(51) Int. Cl.: B66F 9/06, B66F 9/075, B66F 9/24, G06Q 10/08

(54) **VERFAHREN ZUR BEREITSTELLUNG DER POSITIONEN VON LAGERPLÄTZEN IN EINEM LAGER UND FLURFÖRDERZEUG**
METHOD FOR PROVIDING THE POSITIONS OF STORAGE AREAS IN A WAREHOUSE AND AN INDUSTRIAL TRUCK
PROCÉDÉ DE FOURNITURE DES POSITIONS DES EMPLACEMENTS DE STOCKAGE DANS UN ENTREPÔT ET CHARIOT DE MANUTENTION

(30) Priorität: 22.11.2016 DE 102016122485
(43) Veröffentlichungstag der Anmeldung: 23.05.2018
(73) Patentinhaber: Jungheinrich Aktiengesellschaft, 22047 Hamburg (DE)
(72) Erfinder: Kopelke, Jan, 22337 Hamburg (DE); Schulz, Eckhard, 24558 Henstedt-Ulzburg (DE)
(74) Vertreter: Hauck Patentanwaltspartnerschaft mbB

(56) Entgegenhaltungen:
- EP-A1- 2 385 435
- DE-A1-102013 002 554
- US-A1- 2013 096 735
- US-A1- 2016 090 285

## Beschreibung

Die Erfindung betrifft ein Verfahren zur Bereitstellung der Positionen von Lagerplätzen in einem Lager, das eine Anzahl von vorgegebenen Lagerplätzen aufweist, sowie ein Flurförderzeug, mit dem das Verfahren ausgeführt werden kann.

Zur Bewirtschaftung von Lagern mit Flurförderzeugen ist es sinnvoll, die genauen Positionen der einzelnen Lagerplätze des Lagers zu erfassen. Dadurch kann ein Flurförderzeug einen bestimmten Lagerplatz automatisch anfahren oder eine Bedienperson dabei unterstützen. In beiden Fällen sind möglichst genaue Informationen über die Positionen der einzelnen Lagerplätze wünschenswert. Bekannte Verfahren zur Erfassung der Positionen einzelner Lagerplätze setzen auf eine weitgehend manuelle Erfassung der Positionen, insbesondere durch manuelles Anfahren der einzelnen Lagerplätze mit dem Flurförderzeug. Dieses sogenannte "Einteachen" bringt insbesondere bei großen Lagern mit einer Vielzahl einzelner Lagerplätze einen sehr hohen Aufwand mit sich. Zudem erfordern Änderungen der Struktur des Lagers, beispielsweise wenn weitere Lagerplätze ergänzt werden, ein manuelles Eingreifen. Auch eine Korrektur der einmal erfassten Positionen der Lagerplätze ist bei bekannten Verfahren in der Regel nicht vorgesehen bzw. erfordert wiederum ein manuelles Eingreifen einer Bedienperson.

Aus der Druckschrift EP 2 385 435 A1 ist ein Verfahren zur Bereitstellung der Positionen von Lagerplätzen in einem Lager bekannt geworden, bei dem Lageinformationen eines Flurförderzeugs mit einem Ortungssystem, das einen Laserscanner aufweist, erfasst werden. Mit seitlich an dem Flurförderzeug angeordneten Kameras werden Bilddaten von Lagerplätzen erfasst. Auf Grundlage der erfassten Daten wird eine Karte mit den Positionen der Lagerplätze erstellt. Ebenfalls aus der Druckschrift bekannt geworden ist ein Verfahren mit den Merkmalen des Oberbegriffs des Anspruchs 1 und ein Flurförderzeug mit den Merkmalen des Oberbegriffs des Anspruchs 9.

Davon ausgehend ist es die Aufgabe der Erfindung, ein Verfahren zur Bereitstellung der Positionen von Lagerplätzen in einem Lager zur Verfügung zu stellen, das besonders einfach und zuverlässig ausgeführt werden kann sowie ein zur Ausführung des Verfahrens vorgesehenes Flurförderzeug.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Bereitstellung der Positionen von Lagerplätzen in einem Lager, das eine Anzahl von vorgegebenen Lagerplätzen aufweist, mit einem Flurförderzeug, das ein Ortungssystem und mindestens eine seitliche 3D-Kamera, deren Blickrichtung quer zu einer Hauptfahrtrichtung ausgerichtet ist, aufweist. Das Verfahren umfasst die folgenden, automatisch ablaufenden Schritte:
- Erfassen von Bilddaten mit der mindestens einen seitlichen 3D-Kamera,
- Erfassen von Lageinformationen des Flurförderzeugs mit dem Ortungssystem,
- Ermitteln der Positionen einzelner Lagerplätze in einem lagerfesten Koordinatensystem auf Grundlage der Bilddaten und Lageinformationen,
- Abspeichern der ermittelten Positionen in einer Datenbank.

Die Lagerplätze des Lagers weisen jeweils eine definierte Position und Größe auf. Beispielsweise kann jeder Lagerplatz für die Aufnahme einer Palette vorgesehen sein und eine hierfür geeignete Größe aufweisen. Die Lagerplätze sind fest angeordnet, beispielsweise auf dem Boden einer Halle und/oder in Regalen. Die Position eines Lagerplatzes kann durch Koordinaten beschrieben werden, und zwar in einem lagerfesten Koordinatensystem. Die Position eines Lagerplatzes kann die Angabe einer Richtung umfassen, in der Waren ein- und ausgelagert werden können. Bei der Erfindung werden diese Positionen der einzelnen Lagerplätze bereitgestellt, indem sie automatisch ermittelt und in einer Datenbank abgespeichert werden. Auf diese Weise sind die Positionen für ein Flurförderzeug, mit dem das Verfahren ausgeführt und das nachfolgend zur Bewirtschaftung des Lagers eingesetzt wird, jederzeit verfügbar. Die Datenbank kann in dem Flurförderzeug angeordnet sein. Denkbar ist jedoch auch ein Fernzugriff auf eine externe Datenbank, insbesondere über eine Funkverbindung.

Das Flurförderzeug, mit dem das Verfahren ausgeführt wird, hat eine Hauptfahrtrichtung und mindestens eine seitliche 3D-Kamera, deren Blickrichtung quer zu der Hauptfahrtrichtung ausgerichtet ist. Mit quer zur Hauptfahrtrichtung ist gemeint, dass die Blickrichtung im Wesentlichen zur Seite gerichtet ist. Sie kann im rechten Winkel zur Hauptfahrtrichtung ausgerichtet sein, jedoch auch davon abweichend schräg nach vorn oder schräg nach hinten weisen. Die Blickrichtung kann waagerecht sein, aber auch davon abweichend schräg nach oben oder schräg nach unten geneigt. Insbesondere können zwei seitliche 3D-Kameras eingesetzt werden, sodass die Umgebung des Flurförderzeugs auf beiden Seiten zugleich erfasst werden kann.

In einem Verfahrens schritt werden mit der mindestens einen seitlichen 3D-Kamera Bilddaten erfasst. Die Bilddaten enthalten zu jedem Bildpunkt eine Tiefeninformation, sodass ein räumliches Abbild der Umgebung erfasst wird. Hierfür kann die 3D-Kamera beispielsweise einen Bildsensor mit matrixartig angeordneten Bildpunkten aufweisen und zu jedem Bildpunkt eine Tiefeninformation erfassen. Die Bilddaten können als Punktwolke dargestellt werden.

In einem Verfahrensschritt werden mit dem Ortungssystem des Flurförderzeugs Lageinformationen erfasst. Diese beziehen sich auf die Anordnung des Flurförderzeugs in dem Lager und umfassen in der Regel Koordinaten einer Position des Flurförderzeugs in einem lagerfesten Koordinatensystem und zusätzlich eine Angabe zur Orientierung des Flurförderzeugs im Raum, insbesondere eine Winkelangabe, die sich auf die Fahrtrichtung bezieht. Derartige Lageinformationen können mit unterschiedlichen Ortungssystemen erfasst werden, beispielsweise gestützt auf optische Systeme unter Verwendung fest vorgegebener Orientierungspunkte in dem Lager oder auf fortlaufend erfasste Informationen über die Bewegung der Räder des Flurförderzeugs. Ebenfalls bekannt sind Ortungssysteme, die diese unterschiedlichen Informationsquellen kombinieren. In jedem Fall stellt das Ortungssystem Informationen zur Verfügung, mit denen die Anordnung des Flurförderzeugs in dem Lager mit der erforderlichen Genauigkeit bestimmt werden kann.

In einem Verfahrensschritt werden die Positionen einzelner Lagerplätze in einem lagerfesten Koordinatensystem auf Grundlage der Bilddaten und Lageinformationen ermittelt. Hierzu wird mit Methoden der Bilderkennung in den erfassten Bilddaten ein Lagerplatz erkannt. Die Koordinaten dieses Lagerplatzes können zunächst in einem auf die mindestens eine seitliche 3D-Kamera bezogenen Koordinatensystem berechnet werden. Mit einer Koordinatentransformation werden sie dann in das lagerfeste Koordinatensystem transformiert, wofür die Lageinformationen über die Anordnung des Flurförderzeugs in dem Lager zum Zeitpunkt der Erfassung der Bilddaten benötigt werden. Die auf diese Weise ermittelten Positionen der einzelnen Lagerplätze werden in einer Datenbank abgespeichert.

Das Verfahren kann so lange durchgeführt werden, bis alle in dem Lager vorhandenen Lagerplätze in der Datenbank erfasst worden sind. Ebenfalls möglich ist eine Beschränkung auf bestimmte Lagerplätze, beispielsweise diejenigen, die in einer bestimmten Regalebene, insbesondere in der untersten Regalebene, angeordnet sind. Die Positionen der übrigen Lagerplätze können dann ggf. später ergänzt werden.

Mit Hilfe der mindestens einen seitlichen 3D-Kamera können somit auf besonders einfache und weitgehend automatische Weise die Positionen einzelner Lagerplätze erfasst werden, ohne dass diese hierfür mit dem Flurförderzeug angefahren werden müssen. Vielmehr kann sich das Flurförderzeug beim Erfassen der Bilddaten in einer weitgehend beliebigen Position in dem Lager befinden, solange das Blickfeld der mindestens einen seitlichen 3D-Kamera einen Lagerplatz erfasst. Mit Hilfe der in den Bilddaten enthaltenen Tiefeninformationen und der skizzierten Koordinatentransformation ist es dann stets möglich, die Position des Lagerplatzes zu bestimmen.

In einer Ausgestaltung ist die mindestens eine seitliche 3D-Kamera eine Time-of-Flight-Kamera. Eine Time-of-Flight-Kamera weist eine Lichtquelle und einen Lichtsensor auf, wobei die Lichtquelle moduliertes, insbesondere gepulstes Licht aussendet, das nach Reflexion von den Gegenständen im Bildfeld durch eine Lichteintrittsöffnung auf eine Vielzahl von Bildpunkten des Lichtsensors, die in der Regel matrixartig angeordnet sind, auftrifft und detektiert wird. Dabei werden Laufzeitunterschiede des Lichts ausgewertet, sodass jedem Bildpunkt ein Wert für die Entfernung des Gegenstands zugeordnet werden kann. Da die optischen Eigenschaften des Systems bekannt sind, kann die Lage eines von jedem Bildpunkt erfassten Objekts im Raum in allen drei Raumrichtungen bestimmt werden. Derartige Time-of-Flight-Kameras sind kommerziell erhältlich und für das erfindungsgemäße Verfahren besonders gut geeignet.

In einer Ausgestaltung wird das Erfassen der Bilddaten und der Lageinformationen durchgeführt, während das Flurförderzeug in der Hauptfahrtrichtung an einem der Lagerplätze vorbeifährt. Ein solches Erfassen der benötigten Daten während der Fahrt ist besonders einfach, da eine Vielzahl entlang des Weges des Fahrzeugs angeordneter Lagerplätze in schneller Folge erfasst werden können. Dadurch ist es möglich, sogar alle in dem Lager (oder in einer bestimmten Regalebene) vorhandenen Lagerplätze zu erfassen, indem das Flurförderzeug ein einziges Mal alle Regalgänge des Lagers abfährt. Gegenüber einem manuellen "Einteachen" verringert sich der Aufwand für das Bereitstellen der Positionen der Lagerplätze dadurch erheblich.

In einer Ausgestaltung weisen die Lagerplätze Schilder mit eindeutigen Kennungen auf, wobei die Kennungen aus den erfassten Bilddaten ausgelesen werden und wobei beim Abspeichern einer ermittelten Position eines Lagerplatzes die zugehörige Kennung mit abgespeichert wird. Die Schilder können beispielsweise Aufkleber oder Magnetschilder sein. Die Kennung kann aus Buchstaben und/oder Zahlen bestehen, aber auch eine besonders einfach maschinenlesbare Form aufweisen, beispielsweise einen Barcode oder einen QR-Code. Durch die automatische Erfassung der eindeutigen Kennungen der Lagerplätze während der Ausführung des Verfahrens wird eine besonders zuverlässige und einfach zu handhabende Datenbasis gewonnen.

In einer Ausgestaltung werden in einem zweiten Optimierungsschritt die zu einem bestimmten Zeitpunkt in der Datenbank gespeicherten Positionen unter Berücksichtigung einer Regalstruktur des Lagers optimiert. Hintergrund ist, dass die mit der mindestens einen seitlichen 3D-Kamera ermittelten Positionen der einzelnen Lagerplätze grundsätzlich eine begrenzte Genauigkeit aufweisen. Die Genauigkeit der verfügbaren Positionen kann verbessert werden, indem die zu mehreren Lagerplätzen ermittelten Positionen mit Randbedingungen, die sich aus der Regalstruktur ergeben, abgeglichen werden. Beispielsweise kann berücksichtigt werden, dass eine Vielzahl nebeneinander angeordneter Lagerplätze in einem Regal jeweils dieselben Abstände voneinander aufweisen. Auf diese Weise können die im ersten Schritt des Verfahrens ermittelten Positionen der einzelnen Lagerplätze korrigiert werden. Die Genauigkeit der verfügbaren Informationen wird dadurch verbessert, weil sich Abweichungen in den einzelnen Positionen "herausmitteln".

In einer Ausgestaltung wird die Regalstruktur auf Grundlage der ausgelesenen Kennungen der Lagerplätze erfasst. Beispielsweise kann in den Kennungen der Lagerplätze eine Information darüber enthalten sein, ob der Lagerplatz einem bestimmten Regal zugeordnet ist. Werden mehrere Lagerplätze erfasst, die zu demselben Regal gehören, kann dies wiederum zur Verbesserung der Genauigkeit der ermittelten Positionen genutzt werden, beispielsweise indem gleiche Abstände zwischen benachbarten Lagerplätzen angenommen werden, oder eine Anordnung der Vorderkanten der Lagerplätze entlang einer Linie. Ebenfalls berücksichtigt werden können von externer Stelle zugeführte Informationen über die Regalstruktur, beispielsweise vorgegebene Lagerplatzabstände in horizontaler und/oder vertikaler Richtung oder die Anzahl der in dem Regal enthaltenen Lagerplätze.

In einer Ausgestaltung wird die Regalstruktur auf Grundlage von vorbekannten und/oder von dem Flurförderzeug erfassten Lagerplatzabständen erfasst. In die Verbesserung der Genauigkeit können somit externe Daten über die Regalstruktur einfließen und/oder von dem Flurförderzeug selbst gemessene Informationen. Beispielsweise kann das Flurförderzeug mit Hilfe der mindestens einen seitlichen 3D-Kamera "im Vorbeifahren" die Anordnung senkrechter Regalträger erfassen und auf Grundlage der zwischen zwei benachbarten, senkrechten Regalträgern vorhandenen Abstände auf die Breite und/oder die Anzahl der dazwischen angeordneten Lagerplätze schließen.

Bei der Erfindung werden in einem ersten Optimierungsschritt während eines Einoder Auslagerungsvorgangs mit einer in der Hauptfahrtrichtung ausgerichteten Front-3D-Kamera Bilddaten eines Lagerplatzes erfasst und auf Grundlage dieser Bilddaten werden zugehörige Positionsdaten des Lagerplatzes ermittelt, wobei die zuvor in der Datenbank gespeicherten Positionsdaten des Lagerplatzes angepasst oder ersetzt werden. Die Front-3D-Kamera ist in Hauptfahrtrichtung ausgerichtet, d.h. während des Ein- oder Auslagerns deckt ihr Blickfeld den betreffenden Lagerplatz optimal ab, sodass besonders genaue Positionsdaten gewonnen werden können. Auf Grundlage der Bilddaten dieser Front-3D-Kamera, wiederum unter Berücksichtigung einer Lageinformation des Flurförderzeugs, können daher besonders genaue Positionen des jeweiligen Lagerplatzes ermittelt werden. Die Genauigkeit der anschließend in der Datenbank gespeicherten Positionsdaten wird dadurch erheblich verbessert. Ein besonderer Vorteil des Verfahrens ist, dass die auf Grundlage der von der mindestens einen seitlichen 3D-Kamera erfassten Bilddaten ermittelten Positionen, gegebenenfalls nach Durchlaufen des erläuterten, zweiten Optimierungsschritts, für ein automatisches Anfahren der betreffenden Lagerplätze bereits ausreichend genau sein können. Die im ersten Optimierungsschritt erreichte Genauigkeit der Positionsdaten kann der Genauigkeit entsprechen, die bei bekannten Verfahren mit einem manuellen "Einteachen" erreicht wird. Um diese Genauigkeit zu erreichen, ist jedoch kein aufwendiges Anlernen erforderlich, sondern der erste Optimierungsschritt kann während des bereits laufenden, regulären Lagerbetriebs stattfinden. Der erste Optimierungsschritt kann vor oder nach dem zweiten Optimierungsschritt ausgeführt werden, und/oder unabhängig davon.

In einer Ausgestaltung werden während eines Ein- oder Auslagerungsvorgangs mit einer in der Hauptfahrtrichtung ausgerichteten Front-3D-Kamera Bilddaten eines Lagerplatzes erfasst und auf Grundlage dieser Bilddaten werden die Positionen senkrechter Regalträger erfasst und in der Datenbank gespeichert. Hierfür kann dieselbe Front-3D-Kamera verwendet werden, wie für den ersten Optimierungsschritt. Die Positionen der senkrechten Regalträger können für die automatische Bewirtschaftung des Lagers von Interesse sein. Insbesondere können sie für den erläuterten zweiten Optimierungsschritt verwendet werden, da sie Aufschluss über die Regalstruktur geben können.

Die oben angegebene Aufgabe wird ebenfalls gelöst durch das Flurförderzeug mit den Merkmalen des Anspruchs 9. Vorteilhafte Ausgestaltungen sind in den sich anschließenden Unteransprüchen angegeben.

Das Flurförderzeug dient zur Bewirtschaftung eines Lagers, das eine Anzahl von vorgegebenen Lagerplätzen aufweist, wobei das Flurförderzeug ein Ortungssystem, mindestens eine seitliche 3D-Kamera, deren Blickrichtung quer zu einer Hauptfahrtrichtung ausgerichtet ist, und eine Recheneinheit aufweist, die mit dem Ortungssystem und der mindestens einen seitlichen 3D-Kamera verbunden und dazu ausgebildet ist, auf Grundlage der von der mindestens einen seitlichen 3D-Kamera erfassten Bilddaten und der von dem Ortungssystem zur Verfügung gestellten Lageinformationen Daten über die Positionen der einzelnen Lagerplätze in einem lagerfesten Koordinatensystem zu ermitteln und in einer Datenbank abzuspeichern. Zur Erläuterung der Merkmale und Vorteile des Flurförderzeugs wird auf die vorstehenden Erläuterungen des Verfahrens verwiesen, die entsprechend gelten. Es versteht sich, dass das Flurförderzeug insbesondere zur Ausführung des Verfahrens eingerichtet ist und weitere Merkmale aufweisen kann, die sich aus den im Einzelnen erläuterten Verfahrensschritten ergeben.

Die mindestens eine seitliche 3D-Kamera kann insbesondere auf Höhe einer ersten Regalebene des Lagers angeordnet sein, beispielsweise auf einer Höhe im Bereich von 0,6 m bis 2 m. Dadurch können die auf der ersten Regalebene angeordneten Lagerplätze besonders exakt erfasst werden.

Bei der Erfindung weist das Flurförderzeug eine Front-3D-Kamera auf, deren Blickrichtung in der Hauptfahrtrichtung ausgerichtet ist. Hierzu wird ebenfalls auf die vorstehenden Erläuterungen im Zusammenhang mit dem Verfahren verwiesen. Die Front-3D-Kamera kann beispielsweise an einem Lasttragmittel des Flurförderzeugs angeordnet sein, insbesondere in einer Gabelzinkenspitze. Die Front-3D-Kamera kann eine Time-of-Flight-Kamera sein.

In einer Ausgestaltung ist das Flurförderzeug ein führerloses Flurförderzeug. Wie bereits erwähnt, kann das Verfahren vollautomatisch ablaufen, mit einem autonom fahrenden Fahrzeug, beispielsweise einem führerlosen Transportsystem (FTS) oder einem autonom fahrenden Gabelstapler.

In einer Ausgestaltung ist die Recheneinheit dazu ausgebildet, einen oder mehrere der Schritte der Ansprüche 2 bis 8 auszuführen. Hierzu kann die Recheneinheit insbesondere mit einer entsprechenden Software ausgerüstet sein.

Nachfolgend wird die Erfindung anhand eines in Figuren dargestellten Ausführungsbeispiels näher erläutert. Es zeigen:
- Fig. 1: ein Diagramm, das den Ablauf des Verfahrens schematisch darstellt,
- Fig. 2: ein erfindungsgemäßes Flurförderzeug in einer vereinfachten Ansicht von oben,
- Fig. 3: das Flurförderzeug aus Fig. 2 in einer vereinfachten Ansicht von der Seite,
- Fig. 4: ein schematisch dargestelltes Regal mit einem Lagerplatz, der ein Schild aufweist.

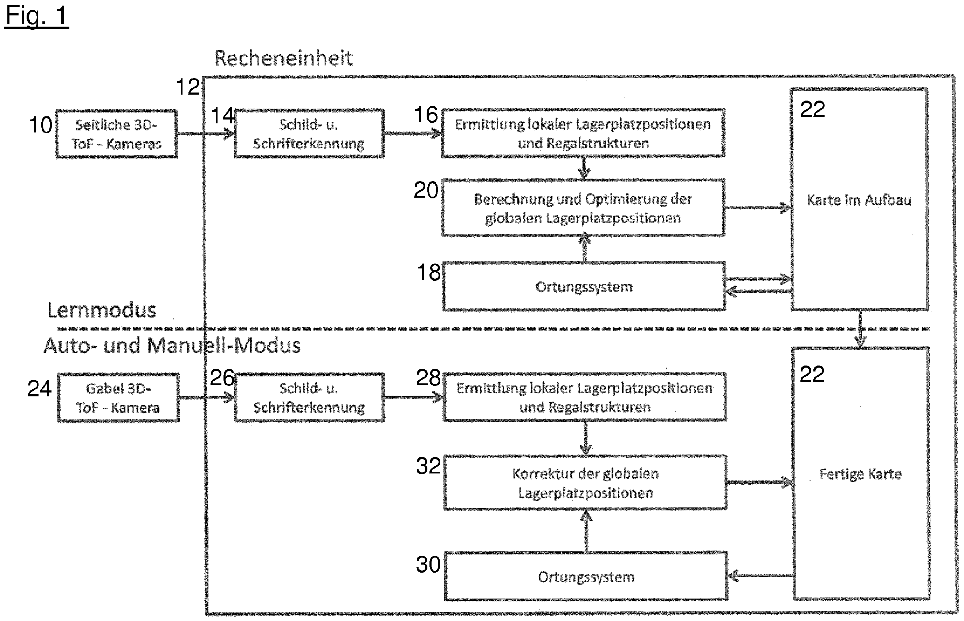

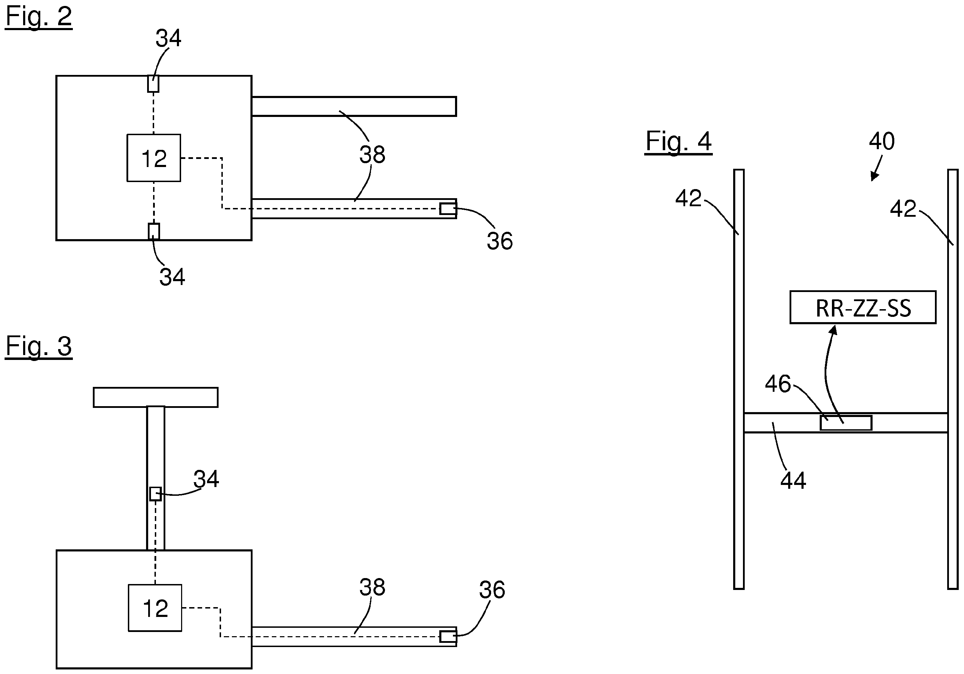

Figur 1 veranschaulicht im oberhalb der gestrichelten Linie angeordneten Teil den Ablauf des erfindungsgemäßen Verfahrens bei der Ermittlung der Positionen der einzelnen Lagerplätze auf Grundlage der Bilddaten, die mit der mindestens einen seitlichen 3D-Kamera erfasst werden. Im Teil unterhalb der gestrichelten Linie stellt das Diagramm Optimierungsschritte dar, die auf Grundlage der mit einer Front-SD-Kamera 36 (siehe Figuren 2 und 3) erfassten Bilddaten ausgeführt werden.

Das Verfahren beginnt im Schritt 10 mit dem Erfassen von Bilddaten mit mindestens einer seitlichen 3D-Kamera 34, die in der Figur 1 als seitliche 3D-ToF-Kamera bezeichnet wird. Die Bilddaten werden in einer Recheneinheit 12 verarbeitet, beispielsweise in einen Bordcomputer des Flurförderzeugs. Hierzu wird im Schritt 14 eine eindeutige Kennung eines Lagerplatzes ausgelesen, indem ein an dem Lagerplatz befestigtes Schild erkannt und ausgelesen wird (Schild- und Schrifterkennung). Im Schritt 16, der ebenfalls von der Recheneinheit 12 ausgeführt wird, wird ebenfalls auf Grundlage der erfassten Bilddaten eine Position eines Lagerplatzes ermittelt sowie eine zugehörige Regalstruktur (Ermittlung lokaler Lagerplatzpositionen und Regalstrukturen). Dies geschieht zunächst in einem auf die mindestens eine seitliche 3D-Kamera 34 bezogenen Koordinatensystem.

Im Schritt 18 wird mit einem Ortungssystem eine Lageinformation des Flurförderzeugs erfasst. Unter Berücksichtigung dieser Lageinformation und der Position des Lagerplatzes, die im Schritt 16 ermittelt wurde, wird im Schritt 20 (Berechnung und Optimierung der globalen Lagerplatzpositionen) die Position des Lagerplatzes in einem lagerfesten Koordinatensystem ermittelt. Unter Berücksichtigung der im Schritt 16 erfassten Regalstrukturen kann ebenfalls im Schritt 20 ein zweiter Optimierungsschritt ausgeführt werden.

Die auf diese Weise ermittelte Position des betreffenden Lagerplatzes wird in einer Datenbank 22 (Karte im Aufbau) abgespeichert. Die Datenbank 22 ist im Beispiel ein Teil der Recheneinheit 12 des Flurförderzeugs.

Alle bislang erläuterten Schritte dienen ausschließlich zur Bereitstellung der Positionen der Lagerplätze und werden bei einer Initialisierung des Systems ausgeführt, indem das Flurförderzeug an den relevanten Lagerplätzen vorbeifährt. Wie erwähnt, können insbesondere gezielt alle Regalgänge des Lagers einmal abgefahren werden. Liegen entsprechende Informationen über die Regalstruktur vor, können im Schritt 20 weitere, nicht von der seitlichen 3D-Kamera 10 erfasste Lagerplätze ergänzt werden, beispielsweise auf höheren Regalebenen. Nach Abschluss dieser in der Fig. 1 auch als "Lernmodus" bezeichneten Abläufe enthält die Datenbank 22 die Positionen aller relevanten Lagerplätze.

Die weiteren, im unteren Teil der Figur 1 ablaufenden Schritte können während der Bewirtschaftung des Lagers mit dem Flurförderzeug ausgeführt werden. Sie werden in der Figur 1 als "Auto- und Manuell-Modus" bezeichnet. Dabei ist mit dem Auto-Modus gemeint, dass bereits auf Grundlage der in der Datenbank 22 enthaltenen Positionen eine automatische Bewirtschaftung des Lagers erfolgt. Mit Manuell-Modus ist gemeint, dass das Flurförderzeug von einer Bedienperson gesteuert wird. In diesem Fall können die nachfolgend dargestellten Schritte im Hintergrund mitlaufen, um die Genauigkeit der in der Datenbank 22 enthaltenen Positionen zu verbessern.

Hierzu werden im Schritt 24 mit einer Front-3D-Kamera 36, die im Beispiel eine Time-of-Flight-Kamera ist (Gabel 3D-ToF-Kamera), Bilddaten erfasst, und zwar während eines Ein- oder Auslagerungsvorgangs. Diese Bilddaten werden innerhalb der Recheneinheit 12 im Schritt 26 einer Schild- und Schrifterkennung unterzogen, wie zum Verfahrens schritt 14 erläutert. Anschließend werden im Schritt 28 von der Recheneinheit wiederum Positionsdaten zu dem betreffenden Lagerplatz und gegebenenfalls Informationen über die Regalstruktur ermittelt. Dies entspricht dem erläuterten Verfahrensschritt 16, stützt sich diesmal jedoch auf die von der 3D-Frontkamera 36 erfassten Bilddaten.

Im Schritt 30 stellt wiederum das Ortungssystem eine Lageinformation zur Verfügung, die im Schritt 32 (Korrektur der globalen Lagerplatzpositionen) gemeinsam mit der im Schritt 28 ermittelten Positionen und gegebenenfalls Informationen über die Regalstruktur zur Korrektur der zuvor bereits erfassten Position des betreffenden Lagerplatzes verwendet wird. Die entsprechend korrigierte Position wird in der Datenbank 22 abgespeichert, sodass darin nach und nach vollständige und exakte Positionen aller Lagerplätze verfügbar sind. Dieser Zustand wird in der Figur 1 als "fertige Karte" bezeichnet.

Figur 2 zeigt ein für das Verfahren bestimmtes Flurförderzeug in einer Ansicht von oben. In der Spitze einer der beiden Gabelzinken 38 eines Lasttragmittels befindet sich eine 3D-Frontkamera 36, deren Blickrichtung nach vorn, entlang der Hauptfahrtrichtung des Flurförderzeugs, ausgerichtet ist. Außerdem hat das Flurförderzeug zwei seitliche 3D-Kameras 34 und eine Recheneinheit 12, die mit der Front-3D-Kamera 36 und den beiden seitlichen 3D-Kameras 34 verbunden ist.

Figur 3 zeigt das Flurförderzeug aus Fig. 2 in einer Ansicht von der Seite. Dort erkennt man, dass die seitlichen 3D-Kameras 34 auf Höhe einer ersten Regalebene angeordnet sind. Ihre Blickrichtungen weisen jeweils nach außen und sind quer zur Hauptfahrtrichtung ausgerichtet.

Das in der Figur 4 skizzierte Regal 40 weist zwei senkrechte Regalträger 42 und einen dazwischen angeordneten, horizontalen Regalträger 44 auf. Oberhalb des horizontalen Regalträgers 44 ist ein Lagerplatz angeordnet, der eine eindeutige Kennung aufweist. Diese ist auf einem an dem horizontalen Regalträger 44 angebrachten Schild 46 vermerkt. Wie in Figur 4 in dem vergrößerten Detail dargestellt, besteht die Kennung aus einer Folge von sechs Buchstaben oder Zahlen. Die beiden ersten Buchstaben oder Zahlen kennzeichnen das Regal 40, an dritter und vierter Stelle der Kennung befinden sich Informationen über die Zeile des Regals 40, in der der Lagerplatz angeordnet ist, und an den beiden letzten Stellen der Kennung befindet sich eine Information über die Spalte des Regals 40, in der der Lagerplatz angeordnet ist.

## Patentansprüche

1. Verfahren zur Bereitstellung der Positionen von Lagerplätzen in einem Lager, das eine Anzahl von vorgegebenen Lagerplätzen aufweist, mit einem Flurförderzeug, das ein Ortungssystem und mindestens eine seitliche Kamera (34), deren Blickrichtung quer zu einer Hauptfahrtrichtung ausgerichtet ist, aufweist, wobei das Verfahren die folgenden, automatisch ablaufenden Schritte umfasst:
• Erfassen von Bilddaten mit der mindestens einen seitlichen Kamera (34),
• Erfassen von Lageinformationen des Flurförderzeugs mit dem Ortungssystem,
• Ermitteln der Positionen einzelner Lagerplätze in einem lagerfesten Koordinatensystem auf Grundlage der Bilddaten und Lageinformationen,
• Abspeichern der ermittelten Positionen in einer Datenbank (22),
**dadurch gekennzeichnet, dass** die mindestens eine seitliche Kamera (34) eine 3D-Kamera ist und dass das Verfahren den folgenden Schritt umfasst:
• Ausführen eines ersten Optimierungsschritts, in dem während eines Einoder Auslagerungsvorgangs mit einer in der Hauptfahrtrichtung ausgerichteten Front-3D-Kamera (36) Bilddaten eines Lagerplatzes erfasst werden und auf Grundlage dieser Bilddaten zugehörige Positionsdaten des Lagerplatzes ermittelt werden, wobei die zuvor in der Datenbank (22) gespeicherten Positionsdaten des Lagerplatzes angepasst oder ersetzt werden.

2. Verfahren nach Anspruch 1, **dadurch gekennzeichnet, dass** die mindestens eine seitliche 3D-Kamera (34) eine Time-of-Flight-Kamera ist.

3. Verfahren nach Anspruch 1 oder 2, **dadurch gekennzeichnet, dass** das Erfassen der Bilddaten und der Lageinformationen durchgeführt wird, während das Flurförderzeug in der Hauptfahrtrichtung an einem der Lagerplätze vorbeifährt.

4. Verfahren nach einem der Ansprüche 1 bis 3, **dadurch gekennzeichnet, dass** die Lagerplätze Schilder (46) mit eindeutigen Kennungen der Lagerplätze aufweisen, wobei die Kennungen aus den erfassten Bilddaten ausgelesen werden, und dass beim Abspeichern einer ermittelten Position eines Lagerplatzes die zugehörige Kennung mit abgespeichert wird.

5. Verfahren nach einem der Ansprüche 1 bis 4, **dadurch gekennzeichnet, dass** in einem zweiten Optimierungsschritt die zu einem bestimmten Zeitpunkt in der Datenbank (22) gespeicherten Positionen unter Berücksichtigung einer Regalstruktur des Lagers optimiert werden.

6. Verfahren nach Anspruch 5, **dadurch gekennzeichnet, dass** die Regalstruktur auf Grundlage der ausgelesenen Kennungen der Lagerplätze erfasst wird.

7. Verfahren nach Anspruch 5 oder 6, **dadurch gekennzeichnet, dass** die Regalstruktur auf Grundlage von vorbekannten und/oder von dem Flurförderzeug erfassten Lagerplatzabständen erfasst wird.

8. Verfahren nach einem der Ansprüche 1 bis 7, **dadurch gekennzeichnet, dass** während eines Ein- oder Auslagerungsvorgangs mit der in der Hauptfahrtrichtung ausgerichteten Front-3D-Kamera (36) Bilddaten eines Lagerplatzes erfasst werden und auf Grundlage dieser Bilddaten die Positionen senkrechter Regalträger (42) erfasst und in der Datenbank (22) gespeichert werden.

9. Flurförderzeug zur Bewirtschaftung eines Lagers, das eine Anzahl von vorgegebenen Lagerplätzen aufweist, wobei das Flurförderzeug ein Ortungssystem, mindestens eine seitliche Kamera (34), deren Blickrichtung quer zu einer Hauptfahrtrichtung ausgerichtet ist, und eine Recheneinheit (12) aufweist, die mit dem Ortungssystem und der mindestens einen seitlichen Kamera (34) verbunden und dazu ausgebildet ist, auf Grundlage der von der mindestens einen seitlichen Kamera (34) erfassten Bilddaten und der von dem Ortungssystem zur Verfügung gestellten Lageinformationen Daten über die Positionen der einzelnen Lagerplätze in einem lagerfesten Koordinatensystem zu ermitteln und in einer Datenbank (22) abzuspeichern, **dadurch gekennzeichnet, dass** die mindestens eine seitliche Kamera (34) eine 3D-Kamera (34) ist und das Flurförderzeug eine Front-3D-Kamera (36) aufweist, deren Blickrichtung in der Hauptfahrtrichtung ausgerichtet ist, wobei die Recheneinheit (12) dazu ausgebildet ist, einen ersten Optimierungsschritt auszuführen, in dem während eines Ein- oder Auslagerungsvorgangs mit der in der Hauptfahrtrichtung ausgerichteten Front-3D-Kamera (36) Bilddaten eines Lagerplatzes erfasst werden und auf Grundlage dieser Bilddaten zugehörige Positionsdaten des Lagerplatzes ermittelt werden, wobei die zuvor in der Datenbank (22) gespeicherten Positionsdaten des Lagerplatzes angepasst oder ersetzt werden.

10. Flurförderzeug nach Anspruch 9, **dadurch gekennzeichnet, dass** das Flurförderzeug ein führerloses Flurförderzeug ist.

11. Flurförderzeug nach Anspruch 9 oder 10, **dadurch gekennzeichnet, dass** die Recheneinheit (12) dazu ausgebildet ist, einen oder mehrere der Schritte der Ansprüche 2 bis 8 auszuführen.

## Claims

1. A method for ascertaining and representing the positions of storage bins in a warehouse having a number of predetermined storage bins, employing an industrial truck which has a location system and at least one lateral camera (34) which has its viewing direction oriented transversely to a main direction of travel, said method comprising the following automatically executed steps:
• Obtaining image data with the at least one lateral camera (34);
• Obtaining position information about the industrial truck, with the location system;
• Determining the positions of individual storage bins in a coordinate system which is fixed in the warehouse, said determinations being based on the image data and the position information; and
• Storing the positions which have been determined, in a database (22), **characterized in that** the at least one lateral camera (34) is a 3D camera and **in that** the method comprises the following step:
• Performing a first optimization step in which, during a storage or retrieval operation, image data of a storage bin are obtained by a front 3D camera (36) which is directed in the main direction of travel, and, based on these image data, associated position data about the storage bin are determined, wherein the position data about said storage bin which have been previously stored in the database (22) are adjusted or are replaced.

2. The method according to claim 1, **characterized in that** the at least one lateral 3D camera (34) is a time-of-flight camera.

3. The method according to claim 1 or 2, **characterized in that** the image data and the position information are obtained while the industrial truck is passing by one of the storage bins while said vehicle is traveling in its main direction of travel.

4. The method according to one of claims 1 to 3, **characterized in that** the storage bins have signs (46) which bear unique identifiers of said storage bins, which identifiers are read out from the image data which have been obtained, and when a position of a storage bin which has been determined is stored, the associated identifier is stored along with it.

5. The method according to one of claims 1 to 4, **characterized in that**, in a second optimization step, the positions which are stored in the database (22) at a given time are optimized, taking into account a rack structure of the warehouse.

6. The method according to claim 5, **characterized in that** the rack structure is determined based on the identifiers of the storage bins, which identifiers have been read out.

7. The method according to claim 5 or 6, **characterized in that** the rack structure is determined based on previously known distances between bins, and/or based on distances between bins which are determined by the industrial truck.

8. The method according to one of claims 1 to 7, **characterized in that**, during a storage or retrieval operation, image data of a storage bin are obtained by the front 3D camera (36) which is directed in the main direction of travel, and, based on these image data, position information about vertical shelf supports (42) is obtained and is stored in the database (22).

9. An industrial truck for managing a warehouse, which warehouse has a plurality of predefined storage bins, wherein said vehicle has a location system, at least one lateral camera (34) with its viewing direction oriented transversely to a main direction of travel, and a computing unit (12) which is connected to the location system and to the at least one lateral camera (34), wherein said computing unit is designed to determine data about the positions of the individual storage bins in a coordinate system which is fixed in the warehouse, based on the image data acquired by the at least one lateral camera (34) and based on the position information provided by the location system, and to store said data in a database (22), **characterized in that** the at least one lateral camera (34) is a 3D camera (34) and the industrial truck comprises a front 3D camera (36) the viewing direction of which is oriented in the main direction of travel, wherein the computing unit (12) is designed to perform a first optimization step in which, during a storage or retrieval operation, image data of a storage bin are obtained by the front 3D camera (36) the viewing direction of which is oriented in the main direction of travel and, based on these image data, associated position data about the storage bin are determined, wherein the position data about said storage bin which have been previously stored in the database (22) are adjusted or are replaced.

10. The industrial truck according to claim 9, **characterized in that** said vehicle is a driverless vehicle.

11. The industrial truck according to claim 9 or 10, **characterized in that** the computing unit (12) is designed to carry out one or more of the steps described in claims 2 to 8.

## Revendications

1. Procédé pour fournir les positions des emplacements de stockage dans un entrepôt, qui présente un nombre d'emplacements de stockage prédéfinis, avec un chariot de manutention, qui comporte un système de localisation et au moins une caméra latérale (34), dont la direction de visée est orientée transversalement par rapport à un sens de déplacement principal, sachant que le procédé comprend les étapes suivantes se déroulant automatiquement :
• la saisie de données d'image avec ladite caméra latérale (34) au moins,
• la saisie des informations sur la situation du chariot de manutention avec le système de localisation,
• la détermination des positions de certains emplacements de stockage dans un système de coordonnées fixe de l'entrepôt sur la base des données d'image et des informations situationnelles,
• la sauvegarde des positions déterminées dans une banque de données (22), **caractérisé en ce que** ladite caméra latérale (34) au moins est une caméra 3D et que le procédé comprend l'étape suivante :
• l'exécution d'une première étape d'optimisation, au cours de laquelle les données d'image d'un emplacement de stockage sont saisies avec une caméra 3D frontale (36) orientée dans le sens de déplacement principal durant une opération de stockage ou de déstockage et des données de position associées de l'emplacement de stockage sont déterminées sur la base de ces données d'image, sachant que les données de position de l'emplacement de stockage enregistrées préalablement dans la banque de données (22) sont adaptées ou remplacées.

2. Procédé selon la revendication 1, **caractérisé en ce que** ladite caméra latérale (34) au moins est une caméra temps de vol *(time of flight).*

3. Procédé selon la revendication 1 ou 2, **caractérisé en ce que** la saisie des données d'image et des informations situationnelles est effectuée alors que le chariot de manutention passe devant l'un des emplacements de stockage dans le sens de déplacement principal.

4. Procédé selon l'une des revendications 1 à 3, **caractérisé en ce que** les emplacements de stockage présentent des panneaux (46) avec des identificateurs uniques des emplacements de stockage, sachant que les identificateurs sont sélectionnés à partir des données d'image saisies, et que l'identificateur associé est sauvegardé conjointement lors de l'enregistrement d'une position déterminée d'un emplacement de stockage.

5. Procédé selon l'une des revendications 1 à 4, **caractérisé en ce que** les positions enregistrées dans la banque de données (22) à un moment donné sont optimisées compte tenu d'une structure de rayonnages de l'entrepôt au cours d'une second étape d'optimisation.

6. Procédé selon la revendication 5, **caractérisé en ce que** la structure de rayonnages est saisie sur la base des identificateurs sélectionnés des emplacements de stockage.

7. Procédé selon la revendication 5 ou 6, **caractérisé en ce que** la structure de rayonnages est saisie sur la base d'écarts entre des emplacements de stockage connus à l'avance et/ou saisis par le chariot de manutention.

8. Procédé selon l'une des revendications 1 à 7, **caractérisé en ce que** les données d'image d'un emplacement de stockage sont saisies avec une caméra 3D frontale (36) orientée dans le sens de déplacement principal durant une opération de stockage ou de déstockage et que les positions de supports de rayonnage verticaux (42) sont saisies sur la base de ces données d'image et enregistrées dans la banque de données (22).

9. Chariot de manutention destiné à l'exploitation d'un entrepôt, qui présente un nombre d'emplacements de stockage prédéfinis, sachant que le chariot de manutention comporte un système de localisation, dont la direction de visée est orientée transversalement par rapport à un sens de déplacement principal, et une unité de calcul (12), qui est reliée au système le localisation et à ladite caméra latérale (34) au moins et qui est conçue de manière à déterminer des données sur les positions des différents emplacements de stockage dans un système de coordonnées fixe de l'entrepôt sur la base des données d'image saisies par ladite caméra latérale (34) au moins et des informations situationnelles fournies par le système le localisation, puis à les sauvegarder dans une banque de données (22), **caractérisé en ce que** ladite caméra latérale (34) au moins est une caméra 3D, **caractérisé en ce que** le chariot de manutention présente une caméra 3D frontale (36), dont la direction de visée est orientée dans le sens de déplacement principal, sachant que l'unité de calcul (12) est conçue de manière à exécuter une première étape d'optimisation, au cours de laquelle les données d'image d'un emplacement de stockage sont saisies avec la caméra 3D frontale (36) orientée dans le sens de déplacement principal durant une opération de stockage ou de déstockage et des données de position associées de l'emplacement de stockage sont déterminées sur la base de ces données d'image, sachant que les données de position de l'emplacement de stockage enregistrées préalablement dans la banque de données (22) sont adaptées ou remplacées.

10. Chariot de manutention selon la revendication 9, **caractérisé en ce que** le chariot de manutention est autoconducteur.

11. Chariot de manutention selon la revendication 9 ou 10, **caractérisé en ce que** l'unité de calcul (12) est conçue de manière à exécuter une ou plusieurs des étapes des revendications 2 à 8.
